# EUROPÄISCHE PATENTANMELDUNG

(11) **EP 1 418 114 A2**
(43) Veröffentlichungstag der Anmeldung: **12.05.2004**
(21) Anmeldenummer: 03025005.4
(22) Anmeldetag: 30.10.2003
(51) Int. Cl.: B62D 6/00, B60L 15/20, B66F 9/075

(54) **Steueranordnung eines Flurförderzeugs**

(30) Priorität: 05.11.2002 DE 10251487
(71) Anmelder: STILL S.A.R.L., 77107 Meaux Cedex (FR)
(72) Erfinder: Deperais, Hugues, 60700 Pont Sainte Maxence (FR)
(74) Vertreter: Lang, Michael

(57) **Zusammenfassung**

Gegenstand der Erfindung ist eine Steueranordnung für die Lenkung und den Fahrantrieb eines Flurförderzeugs mit einem Lenkgeber (7), einer elektronischen Steuereinheit (6) für die Lenkung und einem elektrischen Lenkmotor (2), sowie mit einer elektronischen Steuereinheit (4) für den Fahrantrieb und einem elektrischen Fahrantriebsmotor (1). Erfindungsgemäß ist zwischen der Steuereinheit (6) für die Lenkung und dem Fahrantrieb eine Verbindung (13) zur Übertragung von Daten vorgesehen. Eine Weiterbildung der Erfindung sieht vor, dass zwischen der Steuereinheit (6) für die Lenkung und dem elektrischen Lenkmotor (2) eine Verbindung (10) zur Übertragung von Daten vorgesehen ist.

## Beschreibung

Die Erfindung betrifft eine Steueranordnung für die Lenkung und den Fahrantrieb eines Flurförderzeugs mit einem Lenkgeber, einer elektronischen Steuereinheit für die Lenkung und einem elektrischen Lenkmotor, sowie mit einer elektronischen Steuereinheit für den Fahrantrieb und einem elektrischen Fahrantriebsmotor.

Bei Flurförderzeugen der genannten Art mit einem elektrischen Fahrantriebsmotor und einem elektrischen Lenkmotor kann es sich beispielsweise um Elektro-Gegengewichtsgabelstapler, Quersitzstapler, Kommissionierfahrzeuge oder deichselgelenkte Hubwagen handeln. Üblicherweise sind für die Lenkung und den Fahrantrieb getrennte elektronische Steuereinheiten vorgesehen. Bei Steueranordnungen des Standes der Technik arbeiten die Lenkung und der Fahrantrieb daher unabhängig voneinander.

In bestimmten Betriebssituationen, beispielsweise wenn die Bedienperson während einer Fahrt mit hoher Geschwindigkeit durch schnelles Bewegen des Lenkgebers einen abrupten Lenkvorgang einleitet, oder wenn bei starkem Lenkeinschlag mit hoher Geschwindigkeit gefahren werden soll, kann dies bei Flurförderzeugen mit Steueranordnungen des Standes der Technik zu unsicheren Betriebszuständen führen. Besonders gefährliche Situationen entstehen, wenn die Gefahr besteht, dass das Flurförderzeug umkippt.

Der Erfindung liegt daher die Aufgabe zugrunde, eine Steueranordnung für die Lenkung und den Fahrantrieb eines Flurförderzeugs zur Verfügung zu stellen, mit der die Betriebssicherheit des Flurförderzeugs verbessert werden kann.

Diese Aufgabe wird erfindungsgemäß dadurch gelöst, dass zwischen der Steuereinheit für die Lenkung und dem Fahrantrieb eine Verbindung zur Übertragung von Daten vorgesehen ist.. Diese Verbindung ermöglicht es, Daten über die Betriebszustände der Lenkung und des Fahrantriebs auszutauschen und gegenseitig zu berücksichtigen. Auf diese Weise kann das Entstehen kritischer Betriebszustände von vornherein verhindert werden.

Vorzugsweise ist die Verbindung zur Übertragung von Daten zwischen der Steuereinheit für die Lenkung und der Steuereinheit für den Fahrantrieb vorgesehen.

Eine für die Standsicherheit des Flurförderzeugs besonders wichtige Größe kann berücksichtigt werden, wenn die Steuereinheit für den Fahrantrieb ein von der Geschwindigkeit des Flurförderzeugs abhängiges Signal erzeugt und dieses Signal über die Verbindung zur Übertragung von Daten der Steuereinheit für die Lenkung zur Verfügung steht. Die Fahrgeschwindigkeit des Flurförderzeugs kann damit bei der Steuerung von Lenkvorgängen mit berücksichtigt werden.

Besonders zweckmäßig ist es hierbei, wenn die Steuereinheit für die Lenkung eine maximale Drehzahl des Lenkmotors in Abhängigkeit von der Geschwindigkeit des Flurförderzeugs festlegt. Es wird damit die maximale Lenkgeschwindigkeit in Abhängigkeit von der momentanen Fahrgeschwindigkeit reduziert. Dieser Zusammenhang kann beispielsweise mittels einer in der Steuereinheit für die Lenkung hinterlegten Funktion oder mittels eines Kennfelds gespeichert sein. Der elektrische Lenkmotor wird dann von der Steuereinheit für die Lenkung entsprechend angesteuert.

Gemäß einer zweckmäßigen Weiterbildung der Erfindung ist zwischen der Steuereinheit für die Lenkung und dem elektrischen Lenkmotor eine Verbindung zur Übertragung von Daten vorgesehen. Zwischen dem elektrischen Lenkmotor und der zugehörigen Steuereinheit befindet sich somit nicht nur eine Leistungsversorgung, sondern auch eine Datenleitung.

Der elektrische Lenkmotor erzeugt ein von der Stellung des gelenkten Rades abhängiges Signal und dieses Signal steht über die Verbindung zur Übertragung von Daten der Steuereinheit für die Lenkung zur Verfügung. Die tatsächliche Stellung des gelenkten Rades wird somit der Steuereinheit für die Lenkung zurückgemeldet. Aus dieser Größe kann dann beispielsweise auch die Lenkgeschwindigkeit des gelenkten Rades abgeleitet und in der Steuereinheit verwertet werden.

Gemäß einer anderen zweckmäßigen Weiterbildung der Erfindung ist zwischen der Steuereinheit für den Fahrantrieb und der Lenkung eine Verbindung zur Übertragung von Daten vorgesehen. Eine Datenübertragung erfolgt damit direkt zwischen der Lenkung und der Steuereinheit für den Fahrantrieb.

Vorzugsweise ist diese Verbindung direkt zwischen der Steuereinheit für den Fahrantrieb und dem elektrischen Lenkmotor vorgesehen.

Auch hierbei wird das von dem elektrischen Lenkmotor erzeugte, von der Stellung des gelenkten Rades abhängige Signal herangezogen und dieses Signal über die Verbindung zur Übertragung von Daten der Steuereinheit für den Fahrantrieb zur Verfügung gestellt. Auch die Steuerung der Fahrgeschwindigkeit kann hierdurch in Abhängigkeit von dem momentanen Lenkwinkel oder dessen Ableitung beeinflusst werden.

Bevorzugt legt die Steuereinheit für den Fahrantrieb eine maximale Drehzahl des Fahrmotors in Abhängigkeit von der Stellung des gelenkten Rades festlegt. Die maximale Drehzahl des Fahrmotors und damit die maximale Fahrgeschwindigkeit werden dabei bei zunehmendem Lenkeinschlag reduziert. Auch dieser Zusammenhang kann in Form einer Funktion oder eines Kennfeldes in der Steuereinheit dargestellt sein.

Eine andere Weiterentwicklung der Erfindung liegt vor, wenn zwischen der Steuereinheit für den Fahrantrieb und dem elektrischen Fahrantriebsmotor eine Verbindung zur Übertragung von Daten vorgesehen ist. Auch zwischen dem Fahrantriebsmotor und der zugehörigen Steuereinheit erfolgt somit nicht lediglich eine Leistungs-, sondern auch eine Datenübertragung.

Hierbei erzeugt der elektrische Fahrantriebsmotor ein von der Drehzahl des Fahrantriebsmotors abhängiges Signal und stellt dieses Signal über die Verbindung zur Übertragung von Daten der Steuereinheit für den Fahrantriebsmotor zur Verfügung.
Die Drehzahl des Fahrantriebsmotors ist damit in der Steuerung für den Fahrantriebsmotor bekannt und kann weiter verarbeitet werden.

Insbesondere erzeugt die Steuerung für den Fahrantriebsmotor aus dem von der Drehzahl des Fahrantriebsmotors abhängigen Signal ein von der Geschwindigkeit des Flurförderzeugs abhängiges Signal. Hierzu wird das Drehzahlsignal, unter Berücksichtigung der vorhandenen Getriebeübersetzungen in ein Geschwindigkeitssignal umgerechnet.

Gemäß einer vorteilhaften Weiterbildung der Erfindung ist mindestens eine Verbindung zur Übertragung von Daten als serielle Datenleitung ausgebildet. Die Datenübertragung kann dabei beispielsweise mittels eines Bus-Systems erfolgen.

Mit besonderem Vorteil ist die Erfindung bei Flurförderzeugen einsetzbar, bei denen der Lenkgeber von einer Lenkdeichsel gebildet ist. Deichselgeführte Flurförderzeuge weisen häufig einen elektrischen Fahrantriebsmotor und einen elektrischen Lenkmotor mit getrennten Steuerungen auf. Durch die erfindungsgemäße Datenübertragung zwischen Lenkung und Fahrantrieb kann die Sicherheit des Betriebs solcher Flurförderzeuge erheblich verbessert werden.

Weitere Vorteile und Einzelheiten der Erfindung werden anhand des in der schematischen Figur dargestellten Ausführungsbeispiels näher erläutert.

Die Figur zeigt den schematischen Aufbau einer erfindungsgemäßen Steueranordnung eines Flurförderzeugs, die einen elektrischen Fahrantriebsmotor 1 und einen elektrischen Lenkmotor 2 umfasst. Der Fahrantriebsmotor 1 ist mit einer Steuereinheit 4 für den Fahrantriebsmotor 1 über eine Steuerleitung 3 verbunden, über welche Steuersignale sowie die zum Betrieb des Fahrantriebsmotors 1 benötigte elektrische Energie übertragen werden. Die maßgebliche Eingangsgröße der Steuereinheit 4 für den Fahrantriebsmotor 1 liefert ein nicht dargestellter, von der Bedienperson betätigbarer Fahrschalter des Flurförderzeugs. Der Lenkmotor 2 ist über eine Steuerleitung 5 mit einer Steuereinheit 6 für den Lenkmotor 2 verbunden. Auch über diese Steuerleitung 5 werden sowohl Steuersignale, als auch die zum Betriebs des Lenkmotors 2 erforderliche elektrische Leistung übertragen. Die Steuereinheit 6 ist eingangsseitig mit einem Lenkgeber 7 verbunden, der beispielsweise von einer Lenkdeichsel oder einem Lenkrad gebildet sein kann.

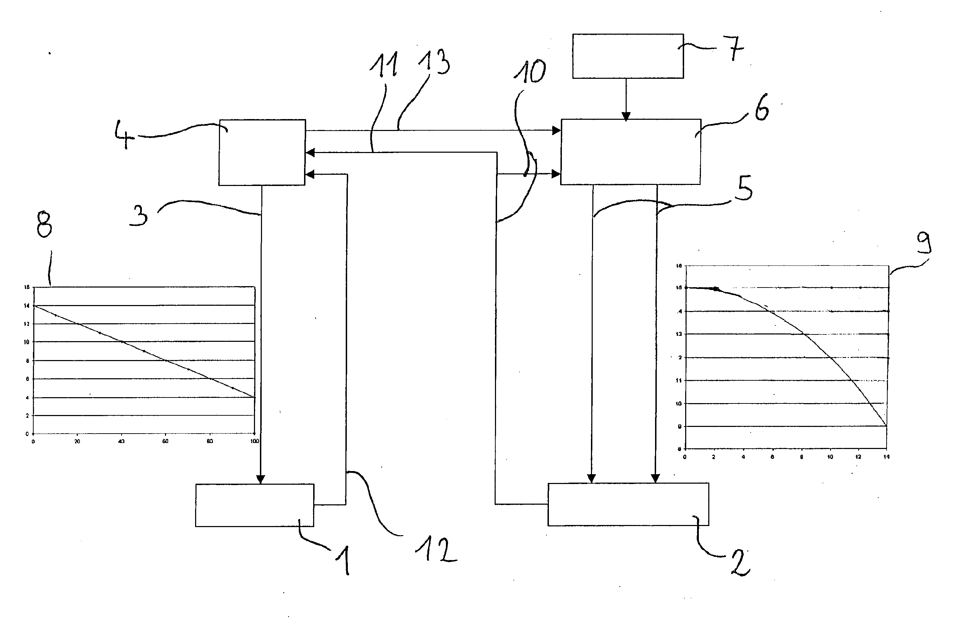

Erfindungsgemäß findet eine Übertragung von Daten zwischen der Lenkung und dem Fahrantrieb statt, so dass Lenkvorgänge an den momentanen Betriebszustand des Fahrantriebs angepasst werden können, ebenso wie die Ansteuerung des Fahrantriebs an den momentanen Betriebszustand der Lenkung. Konkret erfolgt eine Anpassung der maximalen Fahrgeschwindigkeit an den momentanen Lenkwinkel eines gelenkten Rades des Flurförderzeugs. Dieser Zusammenhang ist in dem Diagramm 8 dargestellt, bei dem auf der Rechtsachse der Lenkwinkel des gelenkten Rades in Grad und auf der Hochachse die sich daraus ergebende maximale Fahrgeschwindigkeit in km/h dargestellt ist. Dieser Zusammenhang ist in der Steuereinheit 4 für den Fahrantriebsmotor 1 hinterlegt. Weiter erfolgt eine Anpassung der Lenkgeschwindigkeit des gelenkten Rades an die momentane Fahrgeschwindigkeit des Flurförderzeugs. Das Diagramm 9 zeigt diesen Zusammenhang, der in der Steuereinheit 6 für den Lenkmotor 2 hinterlegt ist. In dem Diagramm 9 ist auf der Rechtsachse die momentane Fahrgeschwindigkeit des Flurförderzeugs in km/h angetragen, auf der Hochachse die Lenkgeschwindigkeit des gelenkten Rades des Flurförderzeugs in Umdrehungen pro Minute.

Zum Erzeugen und Übertragen der erforderlichen Daten sind verschiedene Datenleitungen vorgesehen. Eine erste Verbindung 10 zum Übertragen von Daten überträgt ein die Winkelstellung des gelenkten Rades wiedergebendes Signal von dem Lenkmotor 2 zu der Steuereinheit 6 für die Lenkung. Eine zweite Verbindung 11, die von der ersten Verbindung 10 abzweigt, überträgt dasselbe Signal zu der Steuereinheit 4 für den Fahrantrieb. Über eine Verbindung 12 wird ein Drehzahlsignal des Fahrantriebsmotors 1 von dem Fahrantriebsmotor 1 zu dessen Steuervorrichtung 4 übertragen. Die Steuervorrichtung 4 erzeugt aus dieser Größe ein die momentane Fahrgeschwindigkeit wiedergebendes Signal und überträgt dieses über die Verbindung 13 an die Steuereinheit für die Lenkung.

## Patentansprüche

1. Steueranordnung für die Lenkung und den Fahrantrieb eines Flurförderzeugs mit einem Lenkgeber (7), einer elektronischen Steuereinheit (6) für die Lenkung und einem elektrischen Lenkmotor (2), sowie mit einer elektronischen Steuereinheit (4) für den Fahrantrieb und einem elektrischen Fahrantriebsmotor (1), **dadurch gekennzeichnet, dass** zwischen der Steuereinheit (6) für die Lenkung und dem Fahrantrieb eine Verbindung (13) zur Übertragung von Daten vorgesehen ist.

2. Steueranordnung nach Anspruch 1, dass eine Verbindung (13) zur Übertragung von Daten zwischen der Steuereinheit (6) für die Lenkung und der Steuereinheit (4) für den Fahrantrieb vorgesehen ist.

3. Steueranordnung nach Anspruch 1 oder 2, **dadurch gekennzeichnet, dass** die Steuereinheit (4) für den Fahrantrieb ein von der Geschwindigkeit des Flurförderzeugs abhängiges Signal erzeugt und dieses Signal über die Verbindung (13) zur Übertragung von Daten der Steuereinheit (6) für die Lenkung zur Verfügung steht.

4. Steueranordnung nach einem der Ansprüche 1 bis 3, **dadurch gekennzeichnet, dass** die Steuereinheit (6) für die Lenkung eine maximale Drehzahl des Lenkmotors (2) in Abhängigkeit von der Geschwindigkeit des Flurförderzeugs festlegt.

5. Steueranordnung nach einem der Ansprüche 1 bis 4, **dadurch gekennzeichnet, dass** zwischen der Steuereinheit (6) für die Lenkung und dem elektrischen Lenkmotor (2) eine Verbindung (10) zur Übertragung von Daten vorgesehen ist.

6. Steueranordnung nach Anspruch 5, **dadurch gekennzeichnet, dass** der elektrische Lenkmotor (2) ein von der Stellung des gelenkten Rades abhängiges Signal erzeugt und dieses Signal über die Verbindung (10) zur Übertragung von Daten der Steuereinheit für die Lenkung (6) zur Verfügung steht.

7. Steueranordnung nach einem der Ansprüche 1 bis 6, **dadurch gekennzeichnet, dass** zwischen der Steuereinheit (4) für den Fahrantrieb und der Lenkung eine Verbindung (11) zur Übertragung von Daten vorgesehen ist.

8. Steueranordnung nach Anspruch 7, **dadurch gekennzeichnet, dass** eine Verbindung (11) zur Übertragung von Daten zwischen der Steuereinheit (4) für den Fahrantrieb und dem elektrischen Lenkmotor (2) vorgesehen ist.

9. Steueranordnung nach Anspruch 7 oder 8, **dadurch gekennzeichnet, dass** der elektrische Lenkmotor (2) ein von der Stellung des gelenkten Rades abhängiges Signal erzeugt und dieses Signal über die Verbindung (11) zur Übertragung von Daten der Steuereinheit (4) für den Fahrantrieb zur Verfügung steht.

10. Steueranordnung nach einem der Ansprüche 7 bis 9, **dadurch gekennzeichnet, dass** die Steuereinheit (4) für den Fahrantrieb eine maximale Drehzahl des Fahrmotors in Abhängigkeit von der Stellung des gelenkten Rades festlegt.

11. Steueranordnung nach einem der Ansprüche 1 bis 10, **dadurch gekennzeichnet, dass** zwischen der Steuereinheit (4) für den Fahrantrieb und dem elektrischen Fahrantriebsmotor (1) eine Verbindung (12) zur Übertragung von Daten vorgesehen ist.

12. Steueranordnung nach Anspruch 11, **dadurch gekennzeichnet, dass** der elektrische Fahrantriebsmotor (1) ein von der Drehzahl des Fahrantriebsmotors (1) abhängiges Signal erzeugt und dieses Signal über die Verbindung (12) zur Übertragung von Daten der Steuereinheit (4) für den Fahrantriebsmotor (1) zur Verfügung steht.

13. Steueranordnung nach Anspruch 11 oder 12, **dadurch gekennzeichnet, dass** die Steuerung (4) für den Fahrantriebsmotor (1) aus dem von der Drehzahl des Fahranthebsmotors (1) abhängigen Signal ein von der Geschwindigkeit des Flurförderzeugs abhängiges Signal erzeugt.

14. Steueranordnung nach einem der Ansprüche 1 bis 13, **dadurch gekennzeichnet, dass** mindestens eine Verbindung (10, 11, 12, 13) zur Übertragung von Daten als serielle Datenleitung ausgebildet ist.

15. Steueranordnung nach einem der Ansprüche 1 bis 15, **dadurch gekennzeichnet, dass** der Lenkgeber (7) von einer Lenkdeichsel gebildet ist.
